# EUROPÄISCHE PATENTANMELDUNG

(11) **EP 1 092 990 A2**
(43) Veröffentlichungstag der Anmeldung: **18.04.2001**
(21) Anmeldenummer: 00120692.9
(22) Anmeldetag: 22.09.2000
(51) Int. Cl.: G01V 8/12

(54) **Lichtschranke**

(30) Priorität: 12.10.1999 DE 19949056
(71) Anmelder: Hans & Jos. Kronenberg GmbH, 51427 Bergisch Gladbach (DE)
(72) Erfinder: Wirth, Dieter, 57368 Lennestadt (DE); Hesse, Andreas, 51519 Odenthal (DE); Langen, Jens, 51067 Köln (DE)
(74) Vertreter: Patentanwälte Lippert, Stachow, Schmidt & Partner

(57) **Zusammenfassung**

Die Erfindung betrifft eine Lichtschranke mit einer Lichtquelle (1) und einem Lichtdetektor (8) und einer Umlenkeinrichtung (2, 6) zur Umlenkung des von der Lichtquelle emittierten Lichtes auf den Lichtdetektor, die derart angeordnet und ausgeführt ist, daß das Eintreten eines Objektes (5) in den Strahlengang des Lichtes zu einer Intensitätsänderung des in den Detektor einfallenden Lichtes führt. Um eine Lichtschranke zu schaffen, die eine zuverlässige Überwachung eines Durchtrittsbereichs für Objekte gewährleistet und die einfach und kostengünstig ausgeführt ist, wird vorgeschlagen, daß Lichtquelle (1) und/oder dieser im Strahlengang des Lichtes nachgeordnete Einrichtungen (2) derart ausgebildet sind, daß das von der Lichtquelle (1) emittierte Licht in einen Raumwinkel abgestrahlt wird, und daß das Licht mittels der Lichtumlenkeinrichtung (6) aus verschiedenen Bereichen des Raumwinkels auf den Detektor (8) umlenkbar ist. Zumindest Teile der Lichtumlenkeinrichtung (6) können hierbei an dem Objekt (5) angebracht sind, dessen Eintritt in den abgetasteten Raumwinkel erfaßt werden soll. Die Lichtumlenkeinrichtung weist Mittel (2) zur wiederholten Abtastung des Raumwinkels auf, die als rotierender, prismenförmiger Spiegelkörper (2) ausgebildet sind, wobei Längsachse und Rotationsachse um einen Winkel verkippt sind.

## Beschreibung

Die Erfindung betrifft eine Lichtschranke mit einer Lichtquelle und einem Lichtdetektor sowie einer Umlenkeinrichtung zur Umlenkung des von der Lichtquelle emittierten Lichtes auf den Lichtdetektor, die derart angeordnet und ausgeführt ist, daß das Eintreten eines Objektes in den Strahlengang des Lichtes zu einer Intensitätsänderung des in den Detektor fallenden Lichtes führt.

Derartige Lichtschranken sind vielfältig bekannt. Oftmals sind Lichtquelle und Detektor auf einer Seite eines zu überwachenden Durchgangs angeordnet und auf der gegenüberliegenden Seite stationär ein Reflektor als Strahlenumlenkeinrichtung angebracht, um von der Lichtquelle emittiertes Licht zum Detektor zu reflektieren. Durch Eintritt eines Objektes in den Strahlengang wird die in den Detektor fallende Lichtintensität verringert und hierdurch eine entsprechende Aktion bewirkt wie z. B. das Öffnen einer Tür.

Nachteilig bei diesen Lichtschranken ist, daß der Eintritt eines Objektes im wesentlichen nur entlang eines eindimensionalen, linearen Abschnitts des jeweiligen Durchgangs überwacht wird. Die Anordnung der Lichtschranke ist somit an die gegebenen räumlichen Verhältnisse und das zu überwachende Objekt besonders genau anzupassen. Objekte, die unter- bzw. oberhalb des überwachten linearen Raumbereichs die Lichtschranke passieren, werden somit nicht erfaßt. Zwar können mehrere übereinander angeordnete Lichtschranken vorgesehen sein, dies bedeutet jedoch einen erhöhten Kosten- und Installationsaufwand.

Der Erfindung liegt die Aufgabe zugrunde, eine Lichtschranke zu schaffen, die eine zuverlässige Überwachung eines Durchtrittsbereichs für Objekte gewährleistet und die einfach und kostengünstig ausgeführt ist.

Diese Aufgabe wird durch eine Lichtschranke gelöst, bei welcher erfindungsgemäß die Lichtquelle und/oder dieser im Strahlengang des Lichtes nachgeschaltete Einrichtungen derart ausgebildet sind, daß das von der Lichtquelle emittierte Licht in einen Raumwinkel abgestrahlt wird und mittels der Lichtumlenkeinrichtung aus verschiedenen Bereichen des Raumwinkels auf den Detektor umlenkbar ist. Hierdurch kann ein zwei- oder dreidimensionaler Raum durch die Lichtschranke erfaßt und überwacht werden, so daß der Überwachungsraum vergrößert und damit die Zuverlässigkeit der Objekterfassung gegenüber einer eindimensional arbeitenden Lichtschranke deutlich verbessert ist. Es kann z.B. eine divergierende Lichtquelle eingesetzt werden oder eine Einrichtung zur Bewegung der Lichtquelle vorgesehen sein.

Die Lichtumlenkeinrichtung, z.B. in Form eines reflektierenden Mittels, kann insbesondere an dem zu detektierenden Objekt selber angebracht sein, wodurch mit dem Eintritt des Objektes in den Raumwinkel eine Intensitätserhöhung des in den Detektor fallenden Lichtes erfolgt. Der Detektor kann hierdurch eine höhere Empfindlichkeit und Langlebigkeit aufweisen, da er mit einem niedrigen Nullstrom arbeitet. Als Lichtumlenkeinrichtung, die bei Eintritt des Objektes in den Überwachungsraum eine Änderung der Detektorlichtintensität bewirkt, kann auch das Objekt selber fungieren, z.B. wenn das Objekt den Detektor zumindest teilweise abschattet, wozu Lichtquelle und Detektor auf gegenüberliegenden oder auch derselben Seiten des überwachten Raumes angeordnet sein können. Die Lichtumlenkeinrichtung kann auch stationär angeordnet sein.

Vorzugsweise ist die der Lichtquelle abgewandte Grundfläche des von der Lichtschranke erfaßten Raumwinkels im maximalen Objekterfassungsabstand um ein Vielfaches größer als das Lichtumlenk- bzw. Reflektionsmittel. So kann der erfaßte Raumwinkel Grundfläche aufweisen, die das 5 oder 10-fache, ohne weiteres auch das 100- oder mehrfache der Lichtumlenkfläche aufweist. So kann z.B. bei einer von der Lichtschranke erfaßten Fläche von 1m² bei einem Objektabstand von z.B. ca. 1,5 m die Lichtumlenkfläche am Objekt im Bereich einiger Quadratzentimeter liegen. Die Breite der Basisfläche des erfaßten 2- oder 3-dimensionalen Raumwinkels ist dabei ein Vielfaches größer als der Durchmesser der Lichtquelle oder der Abstand Lichtquelle-Detektor, die jeweils im cm-Bereich oder darunter liegen. Der erfaßte Raumwinkel kann sich insbesondere ausgehend von der Lichtquelle bzw. Austrittsöffnung der Lichtschranke verbreitern, in dieser also seinen Scheitelpunkt aufweisen, und z.B. im wesentlichen eine Pyramidenform haben.

Die Mittel mit reflektierenden Eigenschaften, die an dem Objekt oder stationär angebracht sein können, können im wesentlichen spiegelnd ausgeführt sein oder ein signifikantes Streuvermögen haben, so daß bei Durchtritt des Objektes durch den erfaßten Raumwinkel in praktisch beliebiger Orientierung ein ausreichender Anteil an Streulicht in den Detektor fällt, so daß das Objekt erfaßt werden kann.

Vorteilhafterweise sind Mittel zur wiederholten Abtastung des erfaßten Raumwinkels, der bzgl. des Eintretens eines Objektes zu überwachen ist, vorgesehen, wodurch die Leistung der Lichtquelle beschränkt werden kann. Die Abtastung, die periodisch oder aperiodisch erfolgen kann, kann in gleichmäßigen oder unterschiedlich großen Abtastschritten oder Abtastbereichen erfolgen. Die Abtastung kann auch kontinuierlich erfolgen. Die Abtastschritte oder Abtastbereiche können sich jeweils räumlich und/oder zeitlich ändern, insbesondere bei periodischer Abtastung. Insbesondere kann eine räumlich rasterartige Abtastung zeitlich kontinuierlich erfolgen, wobei die Rasterschritte und/oder Rasterbereiche selber sich bei währender Abrasterung ändern können. Die Abtastung des Rauminhaltes kann z.B. mittels einer im wesentlichen punktförmigen Lichtquelle oder einer solche mit kleiner Lichtaustrittsöffnung verwendet werden, die z.B. klein ist im Vergleich zur optisch wirksamen Fläche der Lichtumlenkeinrichtung, ohne daß die Erfindung hierauf beschränkt ist.

Die Abtastung kann derart erfolgen, dass ein regelmässiges oder unregelmässiges Muster von beabstandeten und/oder geneigt zueineander verlaufenden Lichtstreifen auf der Basisfläche des abgetasteten Raumwinkels entsteht. Die Lichtstreifen können sich in einer Richtung über die gesamte Basisfläche erstrecken oder nur über einen Teil derselben. Die abtastenden Lichtstreifen können im wesentlichen linear sein aber auch andere geeignete Formen aufweisen, z.B. wellen- oder zickzackförmig verlaufen. Vorzugsweise laufen die Lichtstreifen parallel zueinander. Die Abtastung ist nicht auf streifenförmige Lichterscheinungen beschränkt, die Lichterscheinungen können auch beispielsweise punktförmig oder in Art einer geschlossenen Linie, z.B. einer Kreislinie, erfolgen.

Als Mittel zur Abtastung des Rauminhaltes kann ein bewegter Körper mit reflektierenden Oberflächen vorgesehen sein, der von der Lichtquelle beabstandet ist und der von der Lichtquelle emittiertes Licht in den abzutastenden Raumwinkel umlenkt bzw. reflektiert, wobei der Körper derart ausgebildet und angeordnet ist, daß auf unterschiedliche Flächenbereiche des Körper fallendes Licht in unterschiedliche Raumwinkel des abzutastenden Raumes abgelenkt wird. Die Bewegung des Körpers kann in Form einer Rotations-, Oszillations- und/oder Translationsbewegung in einer oder mehreren Raumrichtungen erfolgen und periodisch oder aperiodisch sein. Vorzugsweise ist die Bewegungsrichtung bzw. Drehbewegungsachse (Rotations- und/oder Oszillationsachse) im wesentlichen senkrecht zur Einfallsrichtung des von der Lichtquelle emittierten Lichtes angeordnet, sie kann ggf. auch schräg zu dieser verlaufen. Die Bewegungsrichtung bzw. Drehbewegungsachse kann zusammen mit Lichtquelle und Detektor in einer Ebene oder im wesentlichen senkrecht zu einer diese enthaltende Ebene angeordnet sein, ohne hierauf beschränkt zu sein. Die unterschiedlichen reflektierenden Flächenbereiche des Körpers können als Ebene oder als gekrümmte Flächenelemente ausgeführt sein und beispielsweise bei Koppelung mit einer translatorischen Bewegung in einer geeigneten Richtung auch Zylinder- bzw. Kugelausschnitte darstellen.

Vorzugsweise sind die Flächenelemente derart ausgebildet, daß die Fokussierung des von der Lichtquelle emittierten Lichtstrahls nicht oder nicht wesentlich verändert wird. Durch die Anordnung des bewegten Körpers ist eine konstruktiv einfache Ausführungsform gegeben, die eine Bewegung der Lichtquelle zur Raumabtastung, die prinzipiell möglich ist, nicht notwendig macht.

Der bewegte Körper kann ein prismenähnlicher Körper sein, der um eine durch die Grundflächen verlaufende Achse in Drehbewegung versetzt wird, wobei der Körper direkt oder indirekt von der Lichtquelle emittiertes Licht an den Prismenseitenflächen reflektiert. Die Drehachse des Körpers kann eine virtuelle Achse sein, so daß diese Bewegung durch beliebige Mittel bewirkt wird.

Der prismenähnliche Körper kann insbesondere die Gestalt eines verzerrten oder unverzerrten Prismas aufweisen. Die reflektierenden Flächen des Körpers können Teilflächen des prismenähnlichen Körpers darstellen, die keinen geschlossenen Körper ergeben müssen. So können einzelne oder mehrere Flächen teilweise oder vollständig fehlen. Die Flächen können auch in einer beliebigen Richtung reglmäßig oder unregelmäßig gegeneinander verdreht sein. Im einfachsten Falle besteht der Körper aus zwei einander gegenüberliegenden, voneinander wegweisenden Spiegelflächen, z.B. in Form eines beidseitigen flachen oder räumlichen Spiegels. Die Flächen können parallelogrammförmig ausgeführt sein aber auch runde Begrenzungskanten aufweisen, z. B. in Form von Ellipsoiden oder kreisförmigen Flächen.

Der prismenähnliche Körper kann aus einem geraden, schiefen bzw. regulären Prisma oder Antiprisma abgeleitet sein, wobei Verzerrungen gegeben sein können oder Flächen oder Teilflächen des Grundkörpers fehlen, d.h. nicht als Lichtumlenkflächen ausgebildet sein. Die Seitenflächen des prismenähnlichen Körpers sind vorzugsweise eben, sie können ggfs. aber z. B. aber auch konvex oder konkav gekrümmt oder tordiert sein.

Anstelle eines prismenähnlichen Körpers können ggfs. auch bewegte Körper vorgesehen sein, die ein Parallelepiped, eine Pyramide bzw. Pyramidenstumpf, einem keilförmigen Körper oder andere Körper darstellen oder von diesen abgeleitet sein, d.h. von der Grundform verzerrte Körper oder Teilkörper darstellen.

Zur Abtastung eines Rauminhalts kann der Körper derart bewegt werden, daß die Achse der Drehbewegung mit der Hauptachse des bewegten Körpers, die in der Regel eine durch den Schwerpunkt gehende Achse mit größter Längserstreckung bzw. geringstem Trägheitsmoment des Körpers ist, einen Winkel einschließt. Hierdurch wird eine taumelnde Bewegung des Körpers bewirkt. Die Abrollkurve des Körpers entspricht somit bei einem regelmäßigen Körper einer Sinuskurve, wobei bei Verwendung unregelmäßiger Körperformen sich entsprechend auch unregelmäßig Abrollkurven ergeben.

Zur Erzielung einer regelmäßigen Raumabtastung kann der bewegte Körper derart angeordnet sein, daß der Schwerpunkt desselben auf der Bewegungs- bzw. Drehbewegungsachse liegt.

Bei unregelmäßiger Raumabtastung, die durch eine unregelmäßige Form des Körpers und/oder eine unregelmäßige Bewegung eines regelmäßigen Körpers erfolgen kann, ist die räumliche und/oder zeitliche Veränderung der Abtastung an die Größe und Bewegung, z.B. Bewegungsgeschwindigkeit bzw. -richtung des in den Abtastbereich eintretenden Objektes anzupassen. Bei entsprechend schneller Abtastfrequenz ist z.B. auch eine statistische Abtastung möglich. Für eine zuverlässige Objekterfassung sind somit die Folge und Ausrichtung der Einzelabtastungen sowie deren Geschwindigkeit an die Größe des Objektes bzw. dessen reflektierenden Bereichs und dessen Bewegung anzupassen.

Vorzugsweise weist der bewegte Körper Spiegelflächen auf, die bei der Bewegung des Körpers nacheinander in Reflexstellung mit dem von der Lichtquelle emittierten Licht gebracht werden, wobei die benachbarten Spiegelflächen eine unterschiedliche Neigung zu der Hauptachse des Körpers bzw. zu dessen Drehachse aufweisen. Die Neigungen können sich hinsichtlich ihres Betrages und/oder Vorzeichens unterscheiden.

Insbesondere durch Einstellung der Neigung der einzelnen Spiegelflächen zur Hauptachse des Körpers und/oder Einstellung des Winkels zwischen der Bewegungs- bzw. Drehachse des Körpers zu dessen Hauptachse ist die Größe der abgetasteten Fläche bei gegebener Orientierung und Entfernung des Körpers von der Lichtquelle veränderbar. Gegebenenfalls können Mittel vorgesehen sein, um durch Änderung der Konfiguration der Lichtschranke (Änderung der Bewegung des Körpers, Änderung der Ausrichtung des Körpers zur Einfallsrichtung des von der Lichtquelle emittierten Lichtes, Änderung der Anordnung der Spiegelflächen des Körpers usw.) den abgetasteten Raumwinkel an die jeweiligen Erfordernisse anzupassen.

Vorzugsweise ist der bewegte Körper derart ausgebildet und zur Lichtquelle angeordnet, daß von Mitteln im zu überwachenden Raumabschnitt auf den bewegten Körper zurückreflektiertes Licht durch den Körper in Richtung auf einen Detektor gelenkt wird. Vorzugsweise ist der Detektor unmittelbar neben der Lichtquelle angeordnet. Durch diese Anordnung kann die Lichtquelle eine besonders kompakte Bauweise aufweisen. Um die beschriebene Führung des Lichtstrahls zu ermöglichen, erstreckt sich vorzugsweise die Achse der Drehbewegung durch den Schwerpunkt des Körpers, der vorzugsweise ein reguläres Prisma darstellt, dessen Seitenflächen entgegengesetzt zueinander zur Hauptachse des Körpers geneigt sein können. Der Körper kann von dieser idealen Geometrie oder von äquivalenten anderen Ausgestaltungen abweichen und auch die Bewegungsachse des Körpers sich außerhalb dessen Schwerpunkt durch diesen erstrecken, solange die obengenannte Bedingung gemäß dieser bevorzugten Ausführungsform erfüllt ist, d.h. das Licht über den Körper zurück in Richtung auf den Detektor geleitet wird. Die tolerablen Abweichungen hängen dabei von den jeweiligen Randbedingungen des Systems ab.

Gegebenenfalls können im Strahlengang des Lichtes, z.B. zwischen dem Raumabtastmittel und der Lichtquelle bzw. der Lichtaustrittsöffnung der Lichtschranke und/oder anderen vorgesehenen Lichtumlenkmittel weitere optische Einrichtungen wie Linsen o. dgl. vorgesehen sein, die der Umlenkung des Strahlenganges, der Lichtfokussierung oder anderen Zwecken dienen.

Die Mittel zur Abtastung des Raumwinkels werden vorteilhafterweise von einem bürstenlosen Motor angetrieben.

Als Antriebsmittel für die Mittel zur Abtastung des Raumwinkels kann ein Schrittmotor eingesetzt werden, der vorzugsweise mit einem Strom versorgt wird, der oberhalb des Minimalstroms zur Durchführung einer Schrittbewegung gespeist wird, so daß ein quasi-kontinuierlicher Antrieb des Raumabtastmittels gegeben ist.

Vorzugsweise ist der Detektor derart ausgebildet, daß die Empfindlichkeit desselben von veränderbaren Eigenschaften des von dem Objekt refektierten Lichtes abhängt. Hierdurch kann eine objektspezifische Erkennung des Eintritts eines Objektes in den überwachten Raumwinkel erfolgen, wozu das Objekt z.B. mit einer Einrichtung wie z.B. einem Reflektor versehen sein kann, der die Polarisationsrichtung und/oder -art des einfallenden Lichtes bei der Reflektion ändert.

Des weiteren Mittel vorgesehen sein, die charakteristische Eigenschaften des Lichtes, z.B. des von der Lichtquelle emittierten und/oder von dem Objekt refektierten Lichtes, ändern, um störende Fremdlichteinflüße zu kompensieren. Hierzu können z.B. die Polarisationsrichtung und/oder -art, Modulation und/oder Taktung von Lichtsignalen verändert werden. Hierzu können objektunabhängige, insbesondere auch stationäre, Einrichtungen wie geeignete Reflektoren oder an dem Objekt angebrachte Einrichtungen wie Polarisationsfolien dienen. Es sei darauf hingewiesen, daß bereits durch die Reflektion des von der Lichtquelle emittierten Lichtes an den spiegelnden Flächen der Raumabtastmittel und der erneuten Lichtreflektion auf den Detektor eine Polarisierung des Lichtes erfolgt. Das Ansprechverhaltens des Detektors kann selektiv auf diese Eigenschaften abgestimmt sein oder es können Auswertemittel vorgesehen sein, die das Detektorausgangssignal aufgrund eines Soll-Ist-Vergeichs entsprechend steuern.

Um den störenden Einfluß von Fremdlicht weiter zu vermindern, kann eine Fremdlichtkompensationseinrichtung vorgesehen sein, die bei Überschreitung eines Schwellwertes an Fremdlicht den Detektor zeitweilig außer Betrieb Setzt. Die Kompensationseinrichtung kann derart ausgebildet sein, daß nach Unterschreiten des Schwellwertes oder nach einem vorbestimmten oder ausgewählten Zeitraum der Detektor erneut aktiviert wird. Der Schwellwert kann in Abhängigkeit charakteristischer Parameter des Lichtes Polarisation, Modulierung und/oder Taktung festgesetzt werden. Die Lichtkompensationseinrichtung kann im Bereich der Lichteintrittsöffnung des Lichtschrankengehäuses angeordnet sein.

Die Lichtschranke kann mit Licht verschiedener Wellenlängen betrieben werden, insbesondere mit Licht im sichtbaren oder im IR-Bereich.

Der Detektor kann mit einer Auswerteeinheit gekoppelt sein oder diese aufweisen, die mit Einrichtung verbunden ist, die den Betriebszustand einer zugeordneten Vorrichtung verändert. Als Anwendungsmöglichkeit kann der Detektor mit einer Aufzugsteuerung in Verbindung stehen, so daß bei Detektion des Eintritt eines Objektes, z.B. eines Krankenbettes, in den abgetasteten Raumwinkel der Aufzug selbsttätig angefordert und geöffnet wird. Die Lichtschranke kann auch mit einem Türöffnungssystem oder anderen Einrichtungen verbunden sein. Das Lichtschrankensystem kann insbesondere derart ausgeführt sein, daß der Eintritt eines Objektes objektspezifisch erfaßt wird und z. B. beim Eintritt nicht autorisierter Personen oder Gestände die gekoppelte Einrichtung nicht betätigt wird.

Die Erfindung sei nachfolgend bespielhaft veranschaulicht und anhand der Figuren beispielhaft beschrieben. Es zeigen:
- Fig. 1: eine schematische Darstellung der erfindungsgemäßen Lichtschranke,
- Fig. 2: eine Ansicht des bewegten Körpers zur Raumabtastung in Form eines Prismenkörpers in seitlicher Ansicht (Fig. 2a) und in Draufsicht (Fig. 2b),
- Fig. 3: eine schematische Darstellung des erzeugten Abtastmusters auf einer vorgegebenen Fläche.

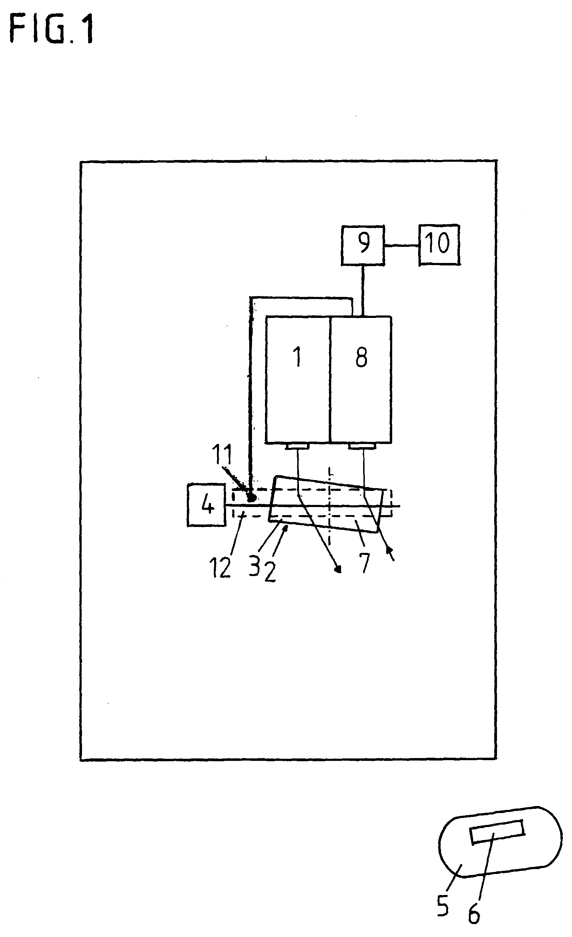

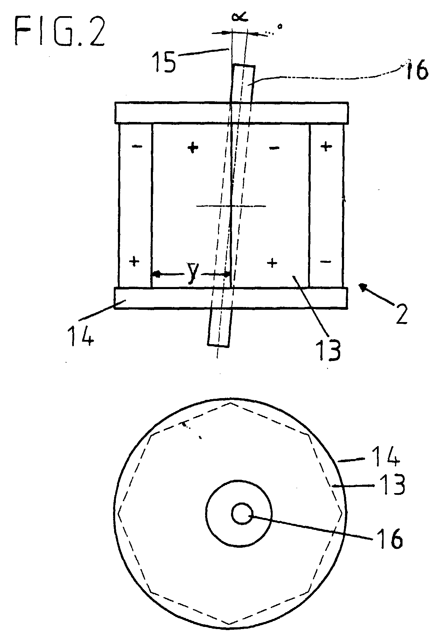

Wie aus Fig. 1 hervorgeht, weist die Lichtschranke eine Lichtquelle 1 auf, wobei das ausgesandte modulierte IR-Licht auf die Spiegelfläche eines im wesentlichen prismatischen Spiegelkörpers 2 fällt, der der wiederholten Abtastung des überwachten dreidimensionalen Raumwinkels dient. Das Licht fällt hierbei auf die der Lichtquelle 1 zugeordnete Hälfte 3 des Spiegelkörpers. Der Spiegelkörper, der in Fig. 2 näher beschrieben ist, wird durch einen bürstenlosen Motor 4 über eine Antriebsachse in eine Rotationsbewegung versetzt und vollführt aufgrund einer Winkelstellung zwischen Rotationsachse und seiner Längs- bzw. Hauptachse eine taumelnde Bewegung. Der von einer Spiegelfläche des Körpers 2 reflektierte Lichtstrahl fällt auf ein Objekt 5, das mit einer reflektierenden Folie 6 versehen ist. Die Folie 6 ist derart ausgebildet, daß die Polarisation des Lichtes bei der Reflektion signifikant verändert wird, z. B. überwiegend linear oder zirkular polarisiertes Licht reflektiert wird oder die Polarisationsrichtung von der entsprechenden Einrichtung gedreht wird, z.B. um 90° gegenübr der des einfallenden Lichtes. Gleichzeitig dient die Folie 6 als Streufolie, so daß das Objekt bzw. die Folie nicht in einer eng definierten Orientierung durch den abgetasteten Raumwinkel durchtreten müssen, damit ein ausreichender Lichtanteil in Richtung auf den Detektor reflektiert wird. Ein ausreichender Anteil des von der Folie 6 reflektierten Lichtes fällt auf die dem Detektor zugeordnete Hälfte 7 des rotierenden Spiegelkörpers 2, wobei der Körper 2 derart ausgestaltet und zur Lichtquelle sowie zum Detektor angeordnet ist, daß das von der Spiegelhälfte 7 reflektierte Licht in den Detektor 8 fällt, der unmittelbar neben der Lichtquelle angeordnet ist. Der Detektor 8 ist mit einer Auswerteeinrichtung 9 verbunden, die aufgrund eines Detektorsignals infolge der Änderung der einfallenden Lichtintensität und aufgrund vorgegebener Schwellwerte bzw. Auswertekriterien den Eintritt des Objektes 5 in den abgetasteten Raumwinkel erkennt. Hierbei ist die Detektorempfindlichkeit selektiv bezüglich der von dem Objekt beeinflußten Eigenschaft des Lichtes, z.B. für eine bestimmte Polarisierung. Von der Auswerteeinheit 9 wird dann ein Signal an die Aufzugssteuerung 10 abgegeben, die aufgrund des Eingangssignals den Aufzug in das entsprechende Stockwerk anfordert. Der Detektor 8 ist mit einer Fremdlichtkompensationseinrichtung 11 gekoppelt, die im Bereich des Fensters 12 des Lichtschrankengehäuses angeordnet ist. Dieses Fenster 12 stimmt hier mit der Lichteintritts- bzw. -austrittsöffnung für das von der Lichtquelle emittierte bzw. in den Detektor einfallende Licht überein. Bei Überschreiten eines entsprechenden Schwellwertes, der z. B. aufgrund von Vorversuchen festgelegt wurde, wird der Detektor 8 so lange außer Betrieb gesetzt, bis der Lichteinfall in die Fremdlichtkompensationseinrichtung 11 den Schwellwert wieder unterschreitet. Fehlauslösungen durch Fremdlicht können hierdurch verhindert werden. Zugleich kann eine Beschädigung des Detektors durch zu starken Fremdlichteinfall verhindert werden.

Der Motor 4 ist als bürstenloser Schrittmotor ausgeführt, der geringfügig oberhalb seines zur Bewegung notwendigen Minimalstromes versorgt wird, so daß er den Spiegelkörper 2 quasikontinuierlich mit einer etwas höheren Geschwindigkeit als seiner Minimalgeschwindigkeit antreibt. Die konstante, möglichst gleichbleibende Rotationsgeschwindigkeit des Spiegelkörpers 2 beträgt ca. 20 - 500 min⁻¹, vorzugsweise ca. 65 - 150 min⁻¹, besonders bevorzugt ca. 100 min⁻¹, ohne hierauf beschränkt zu sein. Die Rotationsgeschwindigkeit ist an die Geschwindigkeit des in den erfaßten Raumbereich eintretenden Objektes anzupassen, und hier so gewählt, daß ein praktisch stehendes Abtastmuster von Lichtreflexen im Raumwinkel erzeugt wird. Es ist jedoch selbstverständlich, daß auch bei sich zeitlich regelmäßig ändernden oder statistischen Abtastmustern eine zuverlässige Erfassung eines in den abgetasteten Raumbereich eintretenden Objektes möglich ist.

Gemäß Fig. 2 weist der Spiegelkörper 2 dieses Ausführungsbeispiels acht ebene Spiegelflächen 13 auf, die den Umfang des prismenförmigen Körpers 2 vollständig umgeben. Die Spiegelflächen erstrecken sich also durchgehened und eben von der der Lichtquelle zugeordneten Seite 3 bis zur Detektorseite 7, die beiden Seiten können aber auch voneinander getrennte oder versetzte bzw. zueinander abgewinkelte Spiegelflächen aufweisen. Es kann jedoch auch eine andere Anzahl von Spiegelflächen vorgesehen sein, vorzugsweise eine geradzahlige Anzahl einschließlich zwei, die praktisch beliebige Werte einnehmen kann, z.B. auch 20 oder mehr. Es sind auch ungeradzahlige Anordnungen mit einer oder vorzugsweise mehreren Spiegelflächen möglich. Die Spiegelflächen 13 werden durch eine obere und untere Scheibe 14 zusätzlich gehaltert, die gleichzeitig der Lagerung der Antriebsachse dient. Die Antriebs- bzw. Rotationsachse 16 schließt mit dessen Längs- bzw- Hauptachse 15, die einer Symmetrieacgse entspricht, einen Winkel α von ca. 5° ein, der auch andere Werte annehmen kann, z. B. zwischen 1° und 10°, ohne hierauf beschränkt zu sein. Durch diese Anordnung der Rotationsachse, die gleichzeitig durch den Schwerpunkt des Körpers 2 geführt ist, wird dieser in einer taumelnde Bewegung versetzt, wodurch sich bei der Abrollbewegung eines Oberflächenbereiches des Körpers auf einer Fläche eine sinusförmige Kurve ergibt.

Die Spiegelflächen 13 sind, wie durch die Vorzeichen angedeutet, mit abwechselnden Vorzeichen zur Längsachse 15 des Körpers geneigt, hier um einen Winkel von ca. +/- 0,5° bis 5°, vorzugsweise +/- 1,0° bis 2,5°, besonders bevorzugt ca. +/-1,7°, wobei die Neigung auch Werte zwischen 0,5 und 5° einnehmen kann, ohne hierauf beschränkt zu sein.

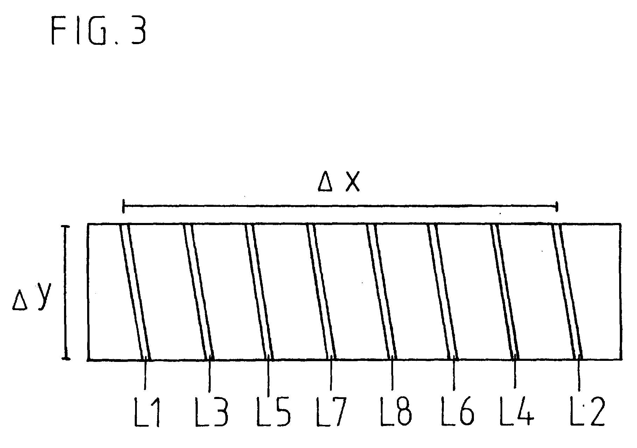

Durch die Ausrichtung des von der Lichtquelle emittierten Lichtstrahls senkrecht zur Längsachse 15 auf die zugeordnete Hälfte 3 des trommelförmigen Spiegelkörpers 2 oberhalb dessen Mittelebene, so daß das reflektierte Licht zum Austrittsfenster 12 reflektiert wird, wird das in Fig. 3 dargestellte Muster von schrägen Lichtstreifen erzeugt. Die Zeichenebene entspricht hierbei einer Ebene des abgetasteten pyramidenförmigen Raumwinkels in einem gegebenen Abstand von der Lichtquelle. Die Lichtstreifen L1 bis L8 werden hierbei in entsprechender Reihenfolge nacheinander durch die in Reflektionsstellung tretenden Spiegelflächen 1 bis 8 des Spiegelkörpers 2 erzeugt. Hierbei wird der Abstand Δ x der Lichtstreifen L1 und L8 durch die Neigung der einzelnen Spiegel zur Längsachse des Spiegelkörpers 2, die Winkelstellung der Drehachse des Spiegelkörpers zu dessen Längsachse und durch den Abstand der betrachteten Fläche zum jeweiligen Spiegel bestimmt. Durch Wahl der genannten Parameter sowie Anzahl der Spiegel kann somit die Anzahl und Dichte der Lichtstreifen und damit die Abtastdichte eingestellt werden. Die Höhe Δy des Abtastmusters wird im wesentlichen durch die Breite y (s. Fig. 2) der Spiegel 13 bestimmt, d.h. Anfang und Ende der Lichtstreifen werden bei Ein- und Austritt des zugeordneten Spiegels in bzw. aus der Reflektionsstellung des Lichtes der Lichtquelle erzeugt. Durch die gezeigte Anordnung ist somit beispielsweise eine Fläche von 1 m² in einem Abstand von 1,5 m von dein Spiegelkörper abtastbar. Eine ungeradzahlige Anordnung von Spiegelflächen würde zu einem Wegfall einer der Leuchtstreifen des Abtastmusters führen, was bei ausreichender Abtastdichte oder Größe des Objektes hinnehmbar sein kann. Unregelmäßige Verzerrungen des prismatischen Spiegelkörpers oder eine Anordnung der Rotationsachse außerhalb des Schwerpunktes des Spiegelkörpers würden zu unregelmäßigen Streifenmustern führen, die ebenfalls eine sichere Erfassung eines Objektes ermöglichen können.

### Bezugszeichenliste

- 1: Lichtquelle
- 2: Spiegelkörper
- 3: Spiegelkörperhälfte
- 4: Antriebsmotor
- 5: Objekt
- 6: Reflektionsfolie
- 7: Spiegelkörperhälfte
- 8: Detektor
- 9: Auswerteeinheit
- 10: Einrichtung
- 11: Fremdlichtkompensationseinrichtung
- 12: Fenster
- 13: Spiegelfläche
- 14: Halterungsscheibe
- 15: Längsachse
- 16: Rotationsachse
- 14: Längsachse
- L1 - L8: Lichtstreifen
- Δ x: Abtastmuster Länge
- Δ y: Abtastmuster Höhe

## Patentansprüche

1. Lichtschranke mit einer Lichtquelle und einem Lichtdetektor und einer Umlenkeinrichtung zur Umlenkung des von der Lichtquelle emittierten Lichtes auf den Lichtdetektor, die derart angeordnet und ausgeführt ist, daß das Eintreten eines Objektes in den Strahlengang des Lichtes zu einer Intensitätsänderung des in den Detektor einfallenden Lichtes führt, **dadurch gekennzeichnet**, daß Lichtquelle (1) und/oder dieser im Strahlengang des Lichtes nachgeordnete Einrichtungen (2) derart ausgebildet sind, daß das von der Lichtquelle (1) emittierte Licht in einen Raumwinkel abgestrahlt wird, und daß das Licht mittels der Lichtumlenkeinrichtung (6) aus verschiedenen Bereichen des Raumwinkels auf den Detektor (8) umlenkbar ist.

2. Lichtschranke nach Anspruch 1, **dadurch gekennzeichnet**, daß zumindest Teile der Lichtumlenkeinrichtung (6) an dem Objekt (5) angebracht sind, dessen Eintritt in den abgetasteten Raumwinkel erfaßt werden soll.

3. Lichtschranke nach Anspruch 1 oder 2, **dadurch gekennzeichnet**, daß die Lichtumlenkeinrichtung Mittel (2) zur wiederholten Abtastung des Raumwinkels aufweist.

4. Lichtschranke nach einem der Ansprüche 1 bis 3, **dadurch gekennzeichnet**, daß die Mittel zur Abtastung des Raumwinkels einen bewegten Körper (2) mit reflektierenden Oberflächenbereichen aufweisen, der von der Lichtquelle (1) beabstandet ist und von der Lichtquelle (1) emittiertes Licht in den abzutastenden Raumwinkel reflektiert, und der derart ausgebildet und angeordnet ist, daß auf unterschiedliche Flächenbereiche des Köpers (2) fallendes Licht in unterschiedliche Raumwinkel des abzutastenden Raumes abgelenkt wird.

5. Lichtschranke nach Anspruch 4, **dadurch gekennzeichnet**, daß der bewegte Körper (2) ein prismenähnlicher Körper ist, der um eine durch die Grundflächen (12) tretende Achse (13) in eine Drehbewegung versetzt wird und daß von der Lichtquelle (1) emittiertes Licht von den Seitenflächen (8) des Körpers reflektiert wird.

6. Lichtschranke nach einem der Ansprüche 1 bis 5, **dadurch gekennzeichnet**, daß die Achse der Drehbewegung (13) mit der Hauptachse des bewegten Körpers (14) einen Winkel einschließt.

7. Lichtschranke nach einem der Ansprüche 1 bis 6, **dadurch gekennzeichnet**, daß der bewegte Körper (2) derart angeordnet ist, daß dessen Schwerpunkt der Drehbewegungsachse (13) liegt.

8. Lichtschranke nach einem der Ansprüche 1 bis 7, **dadurch gekennzeichnet**, daß der bewegte Körper (2) Spiegelflächen (8) aufweist, die bei dessen Bewegung nacheinander in Reflektionsstellung mit dem Licht der Lichtquelle (1) gebracht werden und daß die benachbarten Spiegelflächen (8) eine unterschiedliche Neigung zur Hauptachse des Körpers (14) aufweisen.

9. Lichtschranke nach Anspruch 8, **dadurch gekennzeichnet**, daß die benachbarten Spiegelflächen dem Vorzeichen nach eine unterschiedliche Neigung zur Hauptachse (14) des Körpers aufweisen.

10. Lichtschranke nach einem der Ansprüche 1 bis 9, **dadurch gekennzeichnet**, daß der bewegte Körper (2) derart ausgebildet und zur Lichtquelle (1) angeordnet ist, daß von Mitteln (6) im zu überwachenden Raumwinkel zumindest teilweise auf den Körper zurückreflektiertes Licht durch den Körper (2) in Richtung auf den Detektor (8) gelenkt wird.

11. Lichtschranke nach einem der Ansprüche 1 bis 10, **dadurch gekennzeichnet**, daß der bewegte Körper (2) eine gerade Anzahl von gleichmäßig über den Umfang verteilten Spiegelflächen (8) aufweist.

12. Lichtschranke nach einem der Ansprüche 1 bis 11, **dadurch gekennzeichnet**, daß die Mittel (2) zur Abtastung eines Raumwinkels von einem bürstenlosen Motor (4) angetrieben werden.

13. Lichtschranke nach einem der Ansprüche 1 bis 12, **dadurch gekennzeichnet**, daß die Mittel (2) zur Abtastung des Raumwinkels von einem Schrittmotor (4) angetrieben werden.

14. Lichtschranke nach einem der Ansprüche 1 bis 13, **dadurch gekennzeichnet**, daß der Detektor (8) derart ausgebildet ist, daß dessen Empfindlichkeit bzw. Ausgangssignal von der Polarisation und/oder Modulation und/oder Taktung des einfallenden Lichtes abhängt.

15. Lichtschranke nach einem der Ansprüche 1 bis 14, **dadurch gekennzeichnet**, daß eine Fremdlichtkompensationseinrichtung (11) vorgesehen ist, die bei Überschreiten eines Schwellwertes an Fremdlicht den Detektor (8) zeitweilig außer Betrieb setzt.

16. Lichtschranke nach einem der Ansprüche 1 bis 15, **dadurch gekennzeichnet**, daß der Detektor (8) mit einer Auswerteeinheit (10) und diese mit einer Aufzugsteuerung versehen ist, so daß bei Ansprechen des Detektors die Aufzugsteuerung (12) den zugeordneten Aufzug anfordert.
